# FASCICULE DE BREVET EUROPEEN

(11) **EP 0 521 776 B1**
(45) Date de publication et mention de la délivrance du brevet: **24.01.1996**
(21) Numéro de dépôt: 92401866.6
(22) Date de dépôt: 30.06.1992
(51) Int. Cl.: F16L 37/00, F28F 9/06, F16B 21/10, F16B 9/02, F16L 37/56

(54) **Dispositif de raccordement de deux tuyaux à deux conduits, en particulier pour véhicule automobile**
Kupplungsvorrichtung zwischen zwei Rohren und zwei Leitungen, insbesondere für Kraftfahrzeug
Device for the connection of two pipes to two conduits, especially for a motor véhicle

(30) Priorité: 05.07.1991 FR 9108493
(43) Date de publication de la demande: 07.01.1993
(73) Titulaire: AUTOMOBILES PEUGEOT, F-75116 Paris (FR); AUTOMOBILES CITROEN, F-92200 Neuilly-sur-Seine (FR)
(72) Inventeur: Huon, Daniel, F-78570 Andresy (FR)
(74) Mandataire: Durand, Yves Armand Louis

(56) Documents cités:
- EP-A- 0 390 715
- DE-A- 3 810 385
- US-A- 3 929 356

## Description

La présente invention concerne un dispositif de raccordement de deux tuyaux à deux conduits en particulier pour véhicule automobile.

On connaît déjà d'après le document DE-A-3 810 385 un dispositif pour verrouiller axialement plusieurs raccords enfichables de tuyaux, du type conforme au préambule de la revendication 1.

Le raccordement de deux tuyaux de réfrigération à deux conduits appartenant à un condenseur de moteur de véhicule automobile, est réalisé de plus en plus couramment par l'intermédiaire de brides au détriment des modes de fixation par écrous qui ont été abandonnés compte tenu du fait que l'application de couples de serrage importants occasionnait des ruptures des tuyaux, des arrachements de soudure, des torsions des tubes etc...

On connaît par exemple des brides, constituées d'une plaque de forme générale rectangulaire et comportant d'une part, deux ouvertures destinées chacune au passage de l'un des tuyaux précités, d'autre part, un orifice de passage d'une vis de fixation centrale de la bride sur le condenseur. Avec ce type de brides, les tuyaux sont maintenus dans leurs conduits respectifs après fixation de la bride sur le condenseur.

Certaines de ces brides dites du type "fermé" présentent des ouvertures de forme circulaire dans lesquelles les deux tuyaux sont introduits axialement. Or, dans ce cas, les deux tuyaux sont prisonniers de la bride et le remplacement de l'un des deux tuyaux nécessite le retrait des deux. En outre, les deux tuyaux sont obligatoirement montés en même temps sur le condenseur.

On connaît également des brides du type "fermé" sur lesquelles les tuyaux sont directement soudés, et qui présentent les mêmes inconvénients que les brides précédemment décrites avec en outre la nécessité de respecter des entraxes rigoureux sur les deux pièces.

Et l'on connaît enfin des brides du type "ouvert" dont les ouvertures débouchent sur deux de ses côtés opposés, de façon à ce que les tuyaux soient introduits ou retirés latéralement. Or le montage des tuyaux, dans ce dernier cas est particulièrement difficile.

La présente invention résout ces problèmes et propose un dispositif de raccordement de deux tuyaux à deux conduits en particulier pour véhicule automobile, de conception aisée et permettant de faciliter considérablement le montage des deux tuyaux.

A cet effet, la présente invention a pour objet un dispositif de raccordement de deux tuyaux à deux conduits en particulier pour véhicule automobile, du genre comprenant, d'une part, une pièce comprenant les deux conduits qui débouchent sur une surface d'appui de ladite pièce, et d'autre part, une bride de raccordement fixée sur ladite surface d'appui au moyen d'une vis de fixation traversant un orifice prévu dans ladite bride et vissée dans ladite surface d'appui, ladite bride comprenant deux ouvertures qui sont des lumières en forme d'arcs de cercle centrés sur le centre de l'orifice et destinées à recevoir chacune l'un des deux tuyaux en maintenant l'une de ses extrémités introduite dans l'un des deux conduits, caractérisé en ce que les lumières précitées débouchent sur deux bords opposés de ladite bride, en ce que ladite bride est mobile en rotation autour de la vis de fixation lorsque celle-ci n'est pas complètement serrée, entre une position dite hors service, dans laquelle l'entrée aux deux conduits est dégagée des lumières précitées, une position dite intermédiaire, dans laquelle une lumière se superpose au moins partiellement à l'entrée correspondante de l'un des conduits et l'entrée à l'autre conduit est dégagée de la lumière correspondante grâce à au moins une encoche formée à l'extrémité débouchante de cette lumière, et une position dite de service, dans laquelle les lumières précitées se superposent à l'entrée des deux conduits.

On voit déjà que grâce à l'invention, on résout les problèmes énoncés précédemment à savoir, que le montage est aisé et qu'il n'est plus nécessaire de monter les deux tuyaux en même temps, ni de démonter les deux tuyaux lors du changement de l'un des deux tuyaux.

Suivant une caractéristique particulière de l'invention, l'une au moins des lumières précitées comporte à son extrémité débouchante une encoche de forme générale circulaire permettant l'insertion ou le retrait de l'un des tuyaux avec son bourrelet dans ou bien hors de son conduit correspondant.

Suivant une autre caractéristique particulière de l'invention, la largeur des lumières correspond sensiblement au diamètre des tuyaux, et un bourrelet formé autour de chaque tuyau, destiné à être logé dans un évidement formé à l'extrémité débouchante du conduit correspondant, coopère avec la bride pour retenir le tuyau dans son conduit respectif lorsque la lumière se superpose à l'entrée correspondante de ce conduit.

Suivant une application particulière de l'invention, le dispositif assure le raccordement de deux tuyaux de réfrigération sur deux conduits d'un condenseur de moteur de véhicule automobile, la bride de raccordement étant fixée à la pièce qui est constituée d'une bride du condenseur.

Selon encore une autre caractéristique de l'invention, le dispositif comprend en outre une bride d'orientation fixée sur la bride de raccordement au moyen de la vis de fixation et comprenant deux éléments de guidage des tuyaux et un talon destiné à venir en butée contre la pièce.

Mais d'autres avantages et caractéristiques de l'invention apparaîtront mieux dans la description détaillée qui suit et se réfère aux dessins annexés donnés uniquement à titre d'exemple et dans lesquels :
La figure 1 est une vue de face de la bride d'un condenseur de moteur de véhicule automobile ;
Les figures 2, 3 et 4 sont des vues de face illustrant le fonctionnement du dispositif de l'invention, pour trois positions de la bride montée pivotante sur la bride du conodenseur, et à savoir respectivement, une position hors service de la bride, une position intermédiaire de service, et une position de service de la bride ;
La figure 5 est une vue partielle, et partiellement en coupe suivant la ligne V-V de la figure 2 ;
La figure 6 est une vue partielle, en coupe suivant la ligne VI-VI de la figure 4 ;
La figure 7 est une vue partielle de face, illustrant le dispositif de l'invention en position de service à laquelle est associée une bride d'orientation des tuyaux ;
La figure 8 est une vue partielle de côté de la figure précédente.

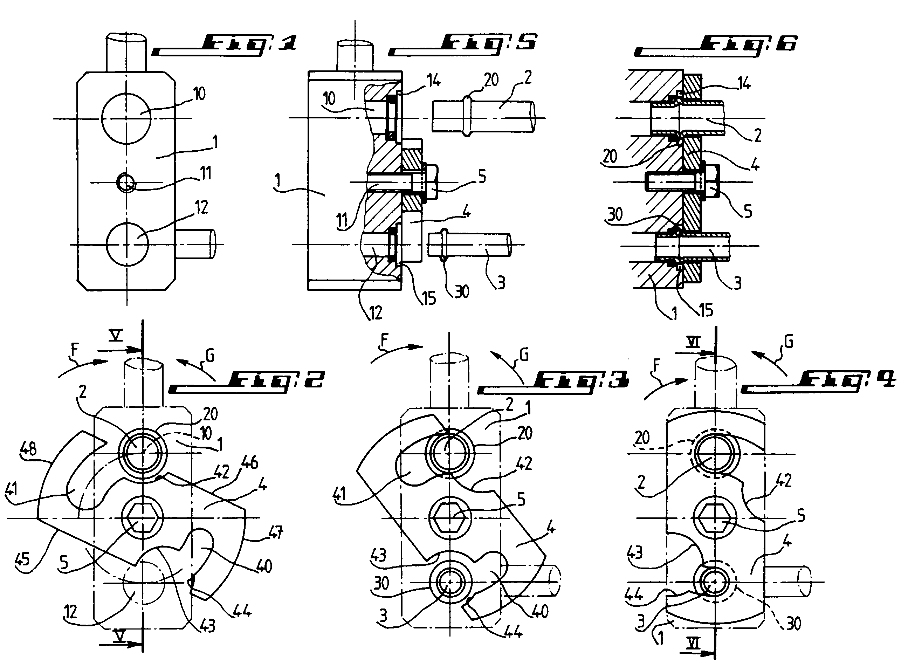

Sur la figure 1, on voit une bride 1 de condenseur de moteur de véhicule automobile, de forme générale parallélépipédique, comprenant d'une part deux conoduits 10, 12 disposés parallélement et destinés à être reliés à deux tuyaux de réfrigération 2, 3, et d'autre part un trou taraudé 11 destiné à recevoir une vis de fixation 5 de la bride de raccordement 4 sur la bride du condenseur 1.

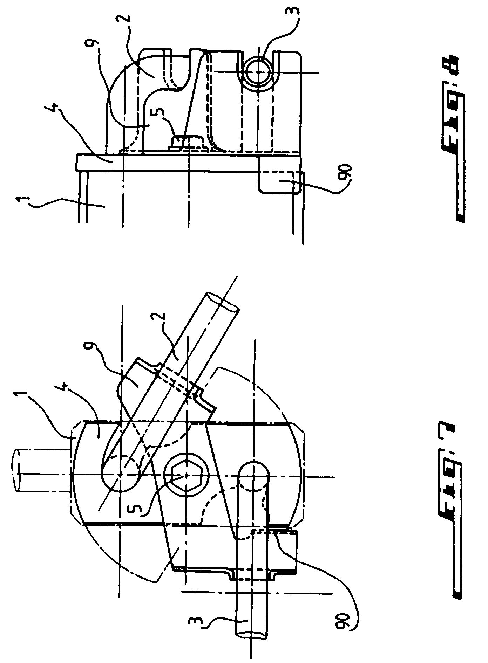

Si l'on se réfère aux figures 2, 3 et 4 on voit que la bride de raccordement 4, est réalisée sous la forme d'une plaque présentant deux bords opposés plans 45, 46, et deux bords opposés bombés 47, 48. Deux ouvertures sont prévues dans la bride 4 et sont réalisées par deux lumières 40, 41 en forme d'arc de cercle, centrées sur l'axe de rotation de la bride 4 autour de la vis de fixation 5, lesdites lumières 40, 41 débouchant chacune sur l'un des deux bords plans opposés 45, 46 de ladite bride 4. On voit également que trois encoches 42, 43, 44 semicirculaires, sont formées au niveau des extrémités débouchantes des lumières 40, 41, dont la fonction sera explicitée lors de la description du fonctionnement de la bride de raccordement 4.

Sur les figures 5 et 6, on voit qu'une bride 4 du dispositif conforme à l'invention est fixée sur la bride du condenseur 1 au umoyen de la vis 5 traversant l'orifice précité 11 de la bride de raccordement 4 pour se visser dans la bride du condenseur 1. Sur la figure 5 plus particulièrement, deux tuyaux de réfrigération 2, 3 sont disposés chacun en face de l'un desdits conduits 10, 12, et comportent un élément de retenue 20, 30 formant un bourrelet au voisinage de l'une de leurs extrémités.

Chacun des éléments de retenue précités 20, 30 est destiné à se loger dans un évidement 14, 15 formé à l'extrémité de chaque conduit 10, 12. Sur la figure 6, la bride de raccordement 4 est mise en service pour maintenir en position les deux tuyaux de réfrigération 2, 3, lesquels ont été introduits respectivement dans les deux lumières 40, 41 ménagées dans la bride de raccordement 4, et dans les conduits 10, 12 du condenseur 1. La retenue des tuyaux précités 2, 3 dans leurs conduits correspondants 10, 12, après serrage de la vis 5, est obtenue grâce aux éléments de retenue précités 20, 30 s'opposant au retrait des tuyaux 2, 3 de la bride 1.

Le fonctionnement de la bride de raccordement 4 du dispositif conforme à une réalisation particulière de l'invention va être décrit à l'aide des figures 2 à 4.

Sur la figure 2, la bride de raccordement 4 est moontée autour de la vis de fixation 5, laquelle n'est pas complètement serrée de façon à autoriser une rotation de ladite bride 4 autour de cette vis 5. Dans cette position de la bride 4 dite position hors service, dans laquelle la bride 4 est la plus inclinée par rapport à la direction verticale, l'extrémité de l'un 10 des conduits 10, 12, formant l'entrée à ce conduit 10, est dégagée grâce à l'encoche semicirculaire 42 de façon à permettre l'insertion de l'un 2 des tuyaux de réfrigération 2, 3 dans le conduit correspondant 10, 12. Il est nécessaire à cette étape d'entraîner la bride 4 en rotation autour de la vis 5 dans le sens de la flèche F, jusqu'à ce que le tuyau sollicité 2 soit engagé au moins pour moitié dans la lumière en arc de cercle correspondante 41, ce qui permet d'empêcher son retrait du conduit 10. Dans cette position de la bride 4, dite position intermédiaire de service et représentée sur la figure 3, l'entrée au second conduit 12 est dégagée grâce aux seconde et troisième encoches semicirculaires 43, 44, de façon à permettre l'insertion du seconod tuyau 3 dans le conduit correspondant 12. Il suffit alors d'entraîner de nouveau la bride 4 en rotation autour de la vis 5 jusqu'à ce qu'elle soit superposée à la bride du condenseur 1, avec pour conséquence l'engagement du second tuyau 3 dans la lumière correspondante 40, bloquant de ce fait le second tuyau 3 dans le conduit correspondant 12, la bride 4 prenant alors la position dite de service représentée sur la figure 4. L'opération de montage des tuyaux de réfrigération 2, 3 s'achèvera par un serrage de la vis de fixation 5 de la bride de raccordement 4 sur la bride du condenseur 1.

Bien que le fonctionnement de la bride pendant le montage des deux tuyaux 2, 3 vienne d'être décrit, on comprendra que le démontage de ces mêmes tuyaux 2, 3 s'effectuera de la même manière, en sens inverse, en commençant par entraîner la bride 4 en rotation suivant la flèche G, de manière à désengager le second tuyau 3 de la lumière correspondante 40, le premier tuyau 2 restant engagé dans sa lumière correspondante 41, puis en continuant à entraîner la bride 4 en rotation afin de libérer le premier tuyau 2 de sa lumière correspondante 41.

On notera que toutes ces opérations pourront éventuellement être réalisées en utilisant une seule main.

Sur les figures 7 et 8, on voit qu'une bride supplémentaire 9 d'orientation des tuyaux de réfrigération 2, 3, a été associée à la bride de raccordement 4 du dispositif de l'invention.

Cette bride d'orientation 9 comprend deux éléments de guidage des tuyaux et un talon 90, destiné à venir en butée contre la bride du condenseur 1, la seconde butée nécessaire à cette bride d'orientation 9 étant réalisée par l'orientation et la position des tuyaux 2, 3. Cette bride (ou patte) 9 est mise en place sur la bride 4 de l'invention avant le montage des tuyaux 2, 3, donc avant le pivotement de la bride 4, et son contour est déterminé de manière à ne pas gêner l'accès à ladite bride 4, lors de son pivotement, au montage des tuyaux 2, 3. A la fin du montage, le serrage de la vis 5 assure la fixation des quatre éléments : bride de raccordement 4, tuyaux 2, 3, et patte 9 sur le condenseur 1.

On a donc réalisé grâce à l'invention un dispositif de raccordement de deux tuyaux à deux conduits, grâce auquel le montage des tuyaux 2, 3 est considérablement facilité par le fait d'une part, que la bride 4 est rotative, et d'autre part, que l'un des deux tuyaux 2, 3 peut être maintenu en position pendant que l'on procède à l'introduction de l'autre tuyau dans son conduit correspondant 10, 12, ceci étant obtenu grâce à la présence des encoches 42, 43, 44 prévues aux extrémités débouchants des lumières 40, 41 formées dans la bride 4.

Bien entendu, l'invention n'est nullement limitée au mode de réalisation décrit et illustré qui n'a été donné qu'à titre d'exemple.

## Revendications

1. Dispositif de raccordement de deux tuyaux (2, 3) à deux conduits (10, 12) en particulier pour véhicule automobile, du genre comprenant, d'une part, une pièce (1) comprenant les deux conduits qui débouchent sur une surface d'appui de ladite pièce, et d'autre part, une bride de raccordement (4) fixée sur ladite surface d'appui au moyen d'une vis de fixation (5) traversant un orifice (11) prévu dans ladite bride et vissée dans ladite surface d'appui, ladite bride comprenant deux ouvertures (40, 41) qui sont des lumières en forme d'arcs de cercle centrés sur le centre de l'orifice (11) et destinées à recevoir chacune l'un des deux tuyaux en maintenant l'une de ses extrémités introduite dans l'un des deux conduits, caractérisé en ce que les lumières précitées (40, 41) débouchent sur deux bords opposés (45, 46) de ladite bride (4), en ce que ladite bride est mobile en rotation autour de la vis de fixation (5) lorsque celle-ci n'est pas complètement serrée, entre une position dite hors service, dans laquelle l'entrée aux deux conduits est dégagée des lumières précitées, une position dite intermédiaire, dans laquelle une lumière (41) se superpose au moins partiellement à l'entrée correspondante de l'un (10) des conduits et l'entrée à l'autre conduit (12) est dégagée de la lumière correspondante (40) grâce à au moins une encoche (43, 44) formée à l'extrémité débouchante de cette lumière, et une position dite de service, dans laquelle les lumières précitées se superposent à l'entrée des deux conduits.

2. Dispositif selon la revendication 1, caractérisé en ce que la largeur des lumières précitées (40, 41) correspond sensiblement au diamètre des tuyaux (2, 3), et en ce qu'un bourrelet (20, 30) formé autour de chaque tuyau (2, 3) et destiné à être logé dans un évidement (14, 15) formé à l'extrémité débouchante du conduit respectif (10, 12), coopère avec la bride (4) pour retenir le tuyau (2, 3) dans son conduit respectif (10, 12) lorsque la lumière se superpose à l'entrée correspondante de ce conduit.

3. Dispositif selon la revendication 2, caractérisé en ce que l'une au moins des lumières précitées (40, 41) comporte à son extrémité débouchante une encoche de forme générale circulaire (42, 43, 44) permettant l'insertion ou bien le retrait de l'un des tuyaux (2, 3) avec son bourrelet (20, 30) dans, ou bien hors, de son conduit correspondant (10, 12).

4. Dispositif selon l'une quelconque des revendications précédentes, caractérisé en ce qu'il assure le raccordement de deux tuyaux de réfrigération (2, 3) sur deux conduits (10, 12) d'un condenseur de moteur de véhicule automobile, la bride de raccordement (4) étant fixée à la pièce (1) qui est constituée d'une bride du condenseur.

5. Dispositif selon l'une quelconque des revendications précédentes, caractérisé en ce qu'il comprend en outre une bride d'orientation (9) fixée sur la bride de raccordement (4) au moyen de la vis de fixation (5) et comprenant deux éléments de guidage des tuyaux (2, 3) et un talon (90) destiné à venir en butée contre la pièce (1).

## Patentansprüche

1. Vorrichtung zur Verbindung von zwei Rohrleitungen (2, 3) mit zwei Kanälen (10, 12) insbesondere für ein Kraftfahrzeug, derjenigen Gattung mit einerseits einem Einzelteil (1) mit zwei Kanälen, die an einer Abstützfläche des besagten Einzelteiles ausmünden und andererseits einem Verbindungsflansch (4), der an der besagten Abstützfläche mittels einer ein in dem besagten Flansch vorgesehenen Loch (11) durchsetzenden und in die besagte Abstützfläche eingeschraubten Befestigungsschraube (5), wobei der besagte Flansch zwei Öffnungen (40, 41) aufweist, die Langlöcher in der Gestalt von im Mittelpunkt des Loches (11) zentrierten Kreisbögen sind und jeweils bestimmt sind, eine der beiden Rohrleitungen aufzunehmen unter Festhaltung des einen in einen der beiden Kanäle eingeführten ihrer Enden, dadurch gekennzeichnet, dass die vorgenannten Langlöcher (40, 41) an zwei entgegengesetzten Rändern (45, 46) des besagten Flansches (4) ausmünden, dass der besagte Flansch um die Befestigungsschraube (5) herum, wenn diese nicht vollständig angezogen ist, drehbeweglich ist zwischen einer sogenannten Ausserbetriebsstellung, in welcher der Eingang der beiden Kanäle von den vorgenannten Langlöchern freigesetzt ist, einer sogenannten Zwischenstellung, in welcher ein Langloch (41) sich wenigstens teilweise mit dem entsprechenden Eingang des einen (10) der Kanäle überlagert und der Eingang des anderen Kanals (12) von dem entsprechenden Langloch (40) dank wenigstens einer am ausmündenden Ende dieses Langloches gebildeten Kerbe (43, 44) freigesetzt ist, und einer sogenannten Betriebsstellung, in welcher die vorgenannten Langlöcher sich mit dem Eingang der beiden Kanäle überlagern.

2. Vorrichtung nach Anspruch 1, dadurch gekennzeichnet, dass die Breite der vorgenannten Langlöcher (40, 41) etwa dem Durchmesser der Rohrleitungen (2, 3) entspricht und dass ein um jede Rohrleitung herum gebildeter und zur Aufnahme in einer am ausmündenden Ende des jeweiligen Kanals (10,12) gebildeten Aussparung (14, 15) bestimmter Wulst (20, 30) mit dem Flansch (4) zusammenwirkt, um die Rohrleitung (2,3) in ihrem jeweiligen Kanal (10, 12) festzuhalten, wenn das Langloch sich mit dem entsprechenden Eingang dieses Kanals überlagert.

3. Vorrichtung nach Anspruch 2, dadurch gekennzeichnet, dass wenigstens eines der vorgenannten Langlöcher (40, 41) an seinem ausmündenden Ende eine Kerbe allgemeiner kreisförmiger Gestalt (42, 43, 44) aufweist, die das Einsetzen oder das Herausnehmen der einen der Rohrleitungen (2, 3) zusammen mit ihrem Wulst (20, 30) in oder aus seinem entsprechenden Kanal (10, 12) gestattet.

4. Vorrichtung nach irgendeinem der vorangehenden Ansprüche, dadurch gekennzeichnet, dass sie die Verbindung von zwei Kühlrohrleitungen (2, 3) mit zwei Kanälen (10, 12) eines Kondensors des Kraftfahrzeugmotors gewährleistet, wobei der Verbindungsflansch (4) an dem Einzelteil (1), der durch einen Flansch des Kondensors gebildet wird, befestigt ist.

5. Vorrichtung nach irgendeinem der vorangehenden Ansprüche, dadurch gekennzeichnet, dass sie ausserdem einen an dem Verbindungsflansch (4) mittels der Befestigungsschraube (5) befestigten Ausrichtungsflansch (9) umfasst, der zwei Elemente zur Führung der Rohrleitungen (2, 3) und einen Absatz (90), der bestimmt ist, an dem Einzelteil (1) zum Anschlag zu kommen, aufweist.

## Claims

1. Device for the connection of two pipes (2, 3) to two ducts (10, 12) in particular for an automotive vehicle, of the kind comprising on the one hand a member (1) comprising both ducts which open at a bearing surface of the said member and on the other hand a connecting flange (4) fastened onto the said bearing surface by means of a fastening screw (5) extending through a hole (11) provided in the said flange and screwed into the said bearing surface, the said flange comprising two apertures (40, 41) which are elongated openings in the shape of arcs of a circle centred on the center of the hole (11) and intended to each one receive one of the two pipes and to keep one of its ends inserted into one of the two ducts, characterized in that the aforesaid elongated openings (40, 41) open at two opposite edges (45, 46) of the said flange (4), in that the said flange is rotatably movable about the fastening screw (5) when the latter is not completely tightened, between one so-called inoperative position in which the inlet of both ducts is disengaged from the aforesaid elongated openings, a so-called intermediate position in which one elongated opening (41) at least partially overlies the corresponding inlet of one (10) of the ducts and the inlet of the other duct (12)is disengaged from the corresponding elongated opening (40) owing to at least one notch (43, 44) formed at the opening end of this elongated opening and one so-called operative position in which the aforesaid elongated openings are overlying the inlet of both ducts.

2. Device according to claim 1, characterized in that the width of the aforesaid elongated openings (40, 41) corresponds substantially to the diameter of the pipes (2, 3) and in that a rim (20, 30) formed about each pipe (2, 3) and intended to be accommodated in a recess (14, 15) formed at the opening end of the respective duct (10, 12) co-operates with the flange (4) for retaining the pipe (2, 3) in its respective duct (10, 12) when the elongated opening overlies the corresponding inlet of this duct.

3. Device according to claim 2, characterized in that at least one of the aforesaid elongated openings (40, 41) comprises at its opening end a notch with a general circular shape (42, 43, 44) permitting the insertion or the withdrawal of one of the pipes (2, 3) together with its rim (20, 30) into or from its corresponding duct (10, 12).

4. Device according to any one of the foregoing claims, characterized in that it ensures the connection of two refrigeration pipes (2, 3) to two ducts (10, 12) of a condenser of the engine of an automotive vehicle, the connecting flange (4) being fastened to the member (1) which is constituted by a flange of the condenser.

5. Device according to any one of the foregoing claims, characterized in that it moreover comprises a directing brace (9) fastened onto the connecting flange (4) by means of the fastening screw (5) and comprising two elements for guiding the pipes (2, 3) and a heel (90) intended to come in abutment against the member (1).
